Europäisches Patentamt

European Patent Office

Office européen des brevets

(11) Publication number: **0 170 313**
**B1**

(12) **EUROPEAN PATENT SPECIFICATION**

(45) Date of publication of patent specification: **13.12.89**

(51) Int. Cl.⁴: **G 02 B 6/26,** G 02 B 6/42

(21) Application number: **85201065.1**

(22) Date of filing: **03.07.85**

(54) **Electro-optical device comprising a laser diode, an input transmission fibre and an output transmission fibre.**

(30) Priority: **09.07.84 NL 8402168**
**24.12.84 NL 8403931**

(43) Date of publication of application:
**05.02.86 Bulletin 86/06**

(45) Publication of the grant of the patent:
**13.12.89 Bulletin 89/50**

(84) Designated Contracting States:
**DE FR GB IT SE**

(56) References cited:
**EP-A-0 081 349**
**EP-A-0 114 439**
**WO-A-79/01106**
**DE-A-2 829 548**
**US-A-4 193 663**

**PATENTS ABSTRACTS OF JAPAN, vol. 7, no. 93,**
**19th April 1983, page 20 P 192; & JP - A - 58 18**
**614 (RITSUO HASUMI) 03-02-1983**

(73) Proprietor: **N.V. Philips' Gloeilampenfabrieken**
**Groenewoudseweg 1**
**NL-5621 BA Eindhoven (NL)**

(72) Inventor: **Khoe, Giok Djan**
**c/o INT. OCTROOIBUREAU B.V. Prof. Holstlaan 6**
**NL-5656 AA Eindhoven (NL)**

(74) Representative: **Cobben, Louis Marie Hubert**
**et al**
**INTERNATIONAAL OCTROOIBUREAU B.V. Prof.**
**Holstlaan 6**
**NL-5656 AA Eindhoven (NL)**

(56) References cited:
**ELECTRONICS LETTERS, vol. 16, no. 9, April**
**1980, pages 322-324, London, GB; L. D'AURIA et**
**al.: "High index microlenses for GaAlAs laser-**
**fibre coupling"**

**IEEE Journal of Quantum Electronics, vol.**
**QE18p010, p. 1662-1665 "Optical Phase**
**Modulation in an injection locked AlGaAs**
**semi-conductor laser"**

Courier Press, Leamington Spa, England.

## Description

The invention relates to an electro-optical device comprising a semiconductor laser, means for providing an optical signal to influence a parameter of the laser radiation, means defining a first radiation path between the semiconductor laser and said means for providing an optical signal, and means defining a second radiation path, one end of said second path being located near the semiconductor laser, in order to receive radiation from the laser.

The parameter to be influenced may be the intensity, the wavelength, or the phase of the semiconductor laser radiation.

Such a device is known, for example, from the article "Optical Phase Modulation in an Injection Locked AlGaAs Semiconductor Laser" in: "IEEE Journal of Quantum Electronics" Vol. QE-18, No. 10, pages 1662—1669. The electro-optical device described therein forms part of a so-called coherent optical transmission system which shows great promise for the future because of its large data-handling capacity and the large distance between the repeater stations. The known electro-optical device effects an optical phase-modulation by injecting a coherent radiation beam, originating from, for example, a first diode laser, into a second diode laser which is directly frequency modulated. In practice this means that in addition to an output transmission fibre an input transmission fibre, which transmits the radiation from the first diode laser to the second diode laser, has to be coupled to the second diode laser of this device.

Apart from being used as a radiation source which is influenced by an injected beam (Injection Locked Source) a semiconductor laser may be used for various other purposes in the coherent optical transmission systems considered here and in other special applications, for example, as a radiation amplifier, an external modulator, a semiconductor-laser switch, an active optical starpoint and a radiation source with external feedback. For these uses, which have been described in the literature, a diode laser must be coupled to an input transmission fibre and at least one output transmission fibre. It has been proposed to couple the transmission fibre to two opposite radiation-emitting surfaces of the semiconductor laser, hereinafter referred to as the front and the rear of the laser. In practice, these fibres will have to be single-mode glass fibres.

As is known, it is very difficult to couple a single-mode transmission fibre to the front of a semiconductor laser with the desired coupling efficiency. Coupling a second single-mode transmission fibre to the rear of the semiconductor laser will pose even greater practical problems because

this requires the use of a special cooling block for the laser,

twice as many critical alignment steps have to be carried out,

a new design of the package for the semiconductor laser is necessary, and

this package should comprise two fibre seals or two window/lens combinations instead of one.

Moreover, it becomes almost impossible to arrange a detector for monitoring the laser radiation inside the package, and only two single-mode transmission fibres can be coupled to a semiconductor laser.

The present invention aims at providing an electro-optical device which mitigates all these problems. The device in accordance with the invention is characterized in that the radiation paths comprise single mode optical transmission fibres, in that the optical transmission fibre defining the first radiation path and at least one optical transmission fibre defining the second radiation path are optically coupled to the same radiation-emitting surface of the semiconductor laser, in that the transmission-fibre ends which face said surface constitute a composite fibre formed from a plurality of fibre ends that have been fused together, said composite fibre being provided with a tapered end portion whose end face is provided with transparent material having a spherical surface.

A first embodiment of the electro-optical device is characterized further in that the material on the end face of the transmission fibre has a refractive index which is substantially higher than that of the transmission-fibre core material. In this way the combination of a fibre end and spherical body or lens has a high numerical aperture and, consequently, a high coupling efficiency is achieved.

A second embodiment of the electro-optical device is characterized in that the material on the end face of the transmission fibre has a melting temperature which is lower than that of the transmission fibre materials and has a refractive index which is substantially equal to that of the core material. In this embodiment the likelihood of radiation being fed back to the diode laser as a result of reflection from the lens-fibre interface is minimized and, despite the lower refractive index of the lens, a sufficiently high coupling efficiency is obtained.

The invention is based on the fact, which until now has not been utilized in the field of optical transmission fibres, that a semiconductor laser is symmetrical and in fact does not have a front or rear. One of these surfaces, the front, may be used as the input face for receiving an optical drive signal and as an output face from which the laser radiation emerges. If the ends of the transmission fibre to be coupled to the front of the semiconductor laser are combined to form a composite fibre end with transverse dimensions of the order to the dimensions of the end of a single-mode transmission fibre which would have been coupled to the semiconductor laser, existing coupling techniques may be employed and the semiconductor laser packages can be substantially identical to the customary packages.

From US—A—4 193 663 it is known to provide a single optical multi-mode transmission fibre with a hemispherical lens of a material of which the melting point is lower than the melting point of the fibre material and which material has a refractive index substantially equal to the refractive index of the core material. In the article "High index microlenses for GaAlAs laser-fibre coupling" in Electronics Letters, Vol. 16, No. 9, pp. 322—324 a similar system is described whereby the lens is of a type of glass which has a refractive index higher than the refractive index of the fibre. In both documents the lens is applied to a single fibre, not to a composite system of fused fibres. Furthermore, in both documents, the diameter of the fibre is reduced by removing part of the cladding, not by heating the fibre material and subsequently pulling till a narrow constriction has formed. The resultant singular, multi-mode fibres with hemispherical lenses are unlikely to give any satisfactory results when used to provide radiation to a semiconductor laser to influence a parameter of the laser radiation, and simultaneously take off radiation from the same radiating end surface of the laser.

It is to be noted that United States Patent Specification No. 4,431,261 describes an electro-optical device in which a plurality of transmission fibres terminate in one composite fibre which is coupled to a radiation source such as a light-emitting diode (LED). However, in said device all the transmission fibres are output fibres and none of the transmission fibres is used for driving or controlling the radiation source. Further, these transmission fibres are not single-mode fibres and the radiation source is not a semiconductor laser.

From the aforementioned United States Patent Specification No. 4,431,261 and European Patent Application No. 0,081,349 it is known per se to taper the common end portion of a plurality of transmission fibres, but until now this step has not been applied to an assembly of a single-mode input transmission fibre and at least one single mode output transmission fibre. Further, in the electro-optical devices described in the two said publications the end face of the composite transmission fibre has not been provided with a spherical transparent body. In the device in accordance with the invention this body functions as a lens which provides an improved coupling efficiency for the composite transmission fibre and which allows larger displacements of the transmission fibre relative to the semiconductor laser.

The coupling efficiency is to be understood to mean the quotient of the semiconductor-laser radiation intensity received by the transmission fibre and the total radiation intensity of this laser.

Forming a plurality of fibres with a common end portion has the additional advantage that all the fibres can be aligned in one operation and that the distribution of the radiation energy among the various fibres can be adjusted simply.

Further characteristic features of the electro-optical device in accordance with the invention are associated with the different uses of the device and are defined in the claims. Hereinafter, the invention will be explained by a detailed description of these uses, by way of example, with reference to the drawings. In the drawings:

Figs. 1a and 1b show parts of a coherent optical transmission system,

Fig. 2 shows a part of such a system using the device in accordance with the invention,

Figs. 3a—3f, 4a—4c, and 5a—5c illustrate different methods of obtaining a composite tapered transmission-fibre end portion, and

Figs. 6—8 illustrate various uses of an electro-optical device in accordance with the invention.

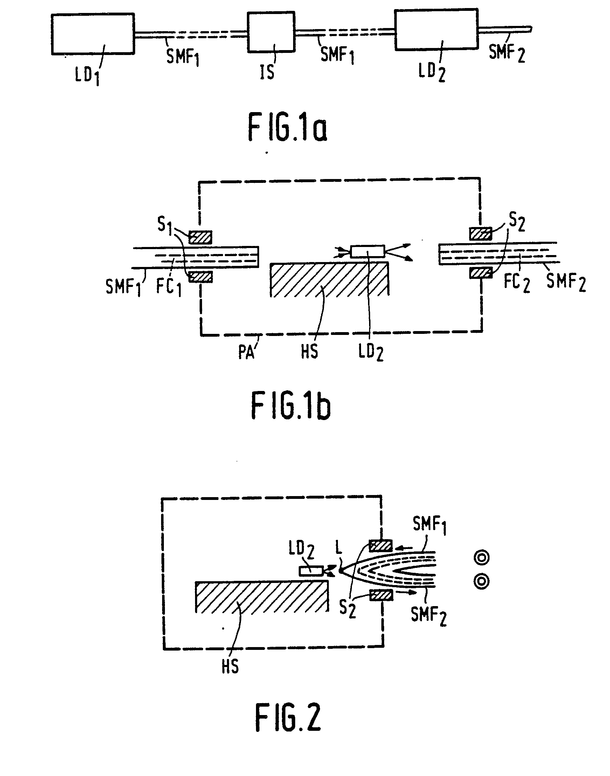

Fig. 1a shows a part of a possible practical version of a coherent optical transmission system. For details of coherent optical transmission systems reference is made to the article: "Heterodyne and Coherent Optical Fiber Communications" in "IEEE Transactions on Microwave Theory and Techniques", Vol. MTT-30, No. 8, pages 1138—1149. In Fig. 1a the references $LD_1$ and $LD_2$ denote a first and a second semiconductor laser respectively, for example diode lasers, which are also referred to as a master laser and a slave laser, respectively. Via a single-mode transmission fibre $SMF_1$ the beam emitted by the diode laser $LD_1$ is transferred to the second diode laser $LD_2$. The phase of the beam emitted by the diode laser $LD_2$ and output via the single-mode transmission fibre $SMF_2$ depends on the beam which originates from $LD_1$ and which is injected into the diode laser $LD_2$. An isolator IS arranged between the two diode lasers ensures that the beam emitted from the rear of $LD_2$ cannot enter the diode laser $LD_1$ and thus influence the beam emitted by $LD_1$.

Fig. 1b shows the part around the diode laser $LD_2$ more in detail. The diode laser $LD_2$ is arranged on a heat sink HS inside the package PA. The output transmission fibre $SMF_2$ with the fibre core $FC_2$ extends into the package PA via a seal $S_2$. The beam from the diode laser $LD_1$ must be coupled into the diode laser $LD_2$. If, as is shown in Fig. 1a, the end of the transmission fibre $SMF_1$ with the fibre core $FC_1$, which fibre transmits this beam, is positioned against the rear of the diode laser $LD_2$ the following problems will arise. First, it is necessary to use a special heat sink whose length is equal to that of the diode laser because otherwise the transmission fibre $SMF_1$ cannot be arranged close enough to the rear of the diode laser and cannot be aligned correctly relative to the diode laser $LD_2$. Moreover, the coupling between the transmission fibre $SMF_1$ and the diode laser $LD_2$ may be disturbed by reflections from the surface of the heat sink. An efficient and stable coupling will then be nearly impossible. Second, during assembly of the device twice as many critical alignment steps are required. Each single-mode transmission fibre has to be aligned separately relative to the diode laser $LD_2$. Third, it is necessary to employ a new package. This package should comprise stable fixing means for the two aligned transmission fibres on both sides of the diode laser $LD_2$. Fourth, instead of one seal $S_2$ or one window lens combination two such seals ($S_1$ and $S_2$) or two window/lens combinations are required. A window/lens combination enables a transmission fibre whose end is located externally of the package to be optically coupled to the diode laser. Fourth, in many cases it may be required to measure the intensity of the radiation emitted by the diode laser. Often this is achieved by means of a radiation-sensitive diode which is situated inside the package at the rear of the diode laser. This is no longer possible if the transmission fibre $SMF_1$ has been coupled to the rear of the diode laser. Finally, it is not possible to couple more than two single-mode transmission fibres to the diode laser.

All the aforementioned problems are avoided if, as is proposed by the invention and as is shown in Fig. 2, the ends of two or more single-mode transmission fibres are fused together, the fused ends are pulled until a diameter of the order of the diameter of a single transmission fibre is obtained, and the composite transmission fibre is coupled to the front of the diode laser. A standard or slightly modified diode-laser package may then be used. The end face of the composite transmission fibre is provided with a lens whose refractive index may be higher than the refractive index of the fibre core. Such a lens, bearing the reference L in Fig. 2, enables the coupling efficiency to be increased and less stringent requirements to be imposed on the alignment accuracy.

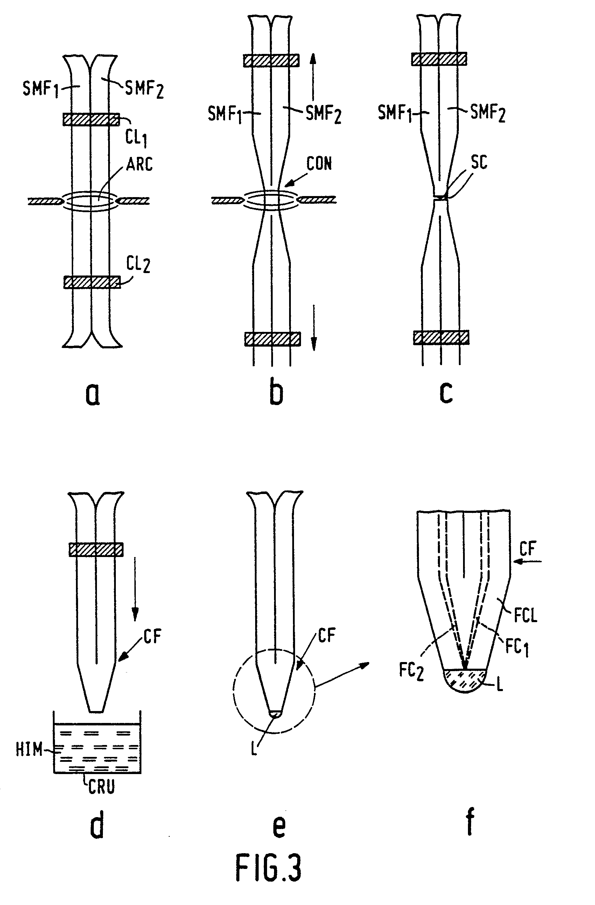

The composite transmission-fibre end can be obtained using the method illustrated by Figs. 3a—3f. In accordance with this method two transmission fibres are clamped against each other by means of clamps CL and are heated, for example, by means of an arc discharge ARC, as indicated in Fig. 3a. As a result of this, the transmission fibres are fused together, forming one composite fibre. As is shown in Fig. 3b, the fibres are pulled while the arc discharge is maintained so that at the location of the arc discharge a narrow constriction CON is formed. After the arc discharge has been switched off the composite fibre is fractured, as is shown schematically in Fig. 3c. For this purpose a score SC may be formed by means of a scribing tool substantially at the location of the narrowest constriction, after which the transmission fibre is subjected to a tensile force until it parts along a flat fracture surface. As shown in Fig. 3d, the composite tapered transmission fibre CF thus obtained is dipped in a liquid or viscous material HIM in a crucible CRU. This material has a refractive index which is, for example, higher than that of the fibre core material. When the fibre end is withdrawn from the crucible a portion of the material HIM will adhere to the fibre by surface tension. This material will adopt a specific drop-like shape when it has a specific viscosity. The dimensions and the shape of this drop can be influenced by the immersion depth and the temperature of the material in the crucible. Further, the shape of the fibre end also determines the shape of the drop. After the fibre end with the drop has been withdrawn from the crucible the drop, if it is made of glass, is allowed to cool. In this way a lens L is formed on the fibre end, as is shown in Fig. 3e.

Fig. 3f shows the fibre end with the lens L on an enlarged scale. Both the cladding FCL and the fibre cores $FC_1$ and $FC_2$ are tapered.

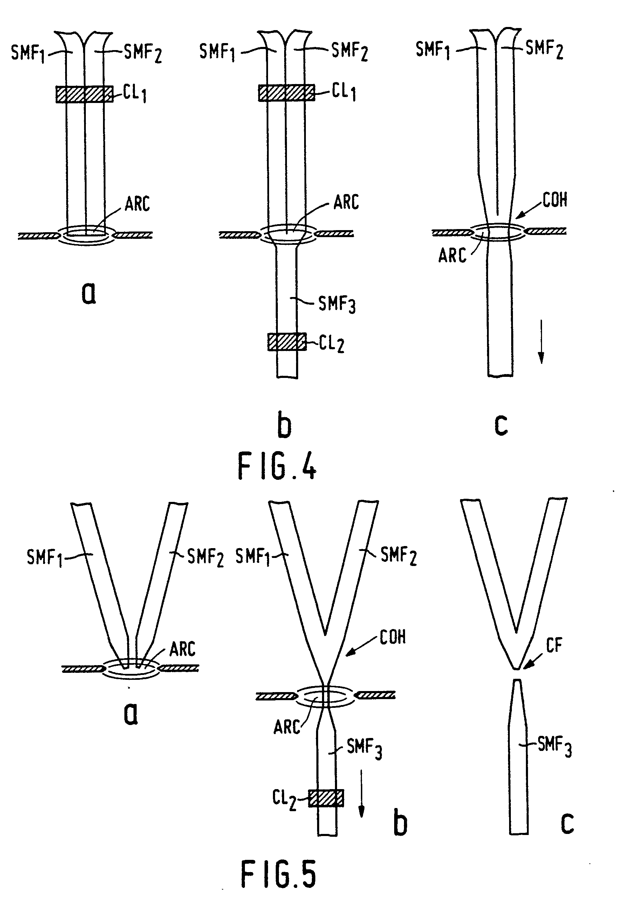

Alternatively, the ends of two single-mode transmission fibres may be fused together, and then a third transmission fibre $SMF_3$ may be fused to the composite transmission fibre, as is shown in Figs. 4a and 4b. Subsequently, the composite fibre is pulled until a narrow constriction CON is formed, as is shown in Fig. 4c. After fracture as illustrated in Fig. 3c, the upper portion of the composite fibre may be treated in a way similar to that described with reference to Figs. 3d and 3e.

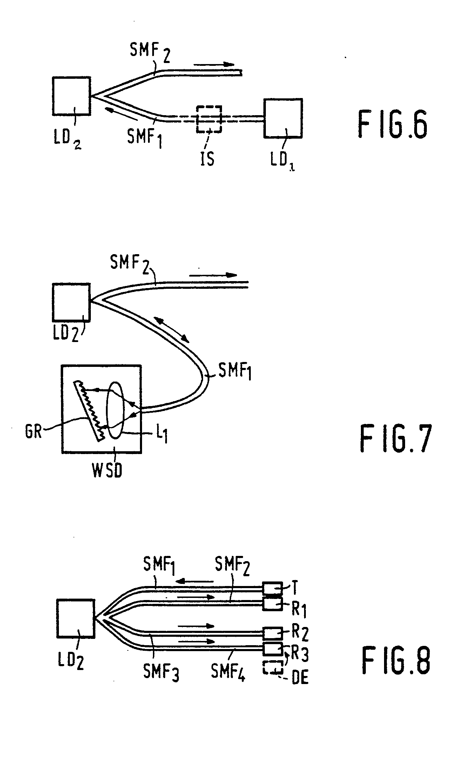

Another possibility of obtaining the desired composite transmission fibres is illustrated in Figs. 5a—4c. The method starts from two single-mode transmission fibres which already have tapered end portions. These tapered end portions are fused together, as shown in Fig. 5a. Subsequently, a third transmission fibre is fused to this assembly and the resulting composite transmission fibre is pulled until a narrow constriction CON is formed, as shown in Fig. 5b. Now, the fibre is fractured along substantially the narrowest constriction, as shown in Fig. 5c, after which the upper composite fibre portion is provided with a lens in the same way as described with reference to Figs. 3d and 3e.

The lens material may have a refractive index which is higher than that of the fibre-core material, so that the combination of fibre core and lens has a numerical aperture which is larger than that of the fibre end alone, resulting in a higher coupling efficiency.

The lens can also be formed by immersing the fibre end in a material whose melting temperature is lower than that of the fibre core or fibre cladding, so that the fibre parameters are not changed as result of immersion, and whose refractive index is substantially equal to that of the core material. In this embodiment reflections from the lens-fibre interface and the resulting feedback of radiation to the diode laser are avoided, so that the coupling efficiency is high in spite of the lower refractive index of the lens material.

Fig. 6 illustrates a first use of the invention. The input transmission fibre of a semiconductor laser, such as a diode laser $LD_2$, is connected to a second diode laser $LD_1$. Between the two diode lasers an isolator IS is arranged. By means of the basic arrangement shown in Fig. 6 various functions can be performed.

1. As stated in the aforementioned article in "IEEE Journal of Quantum Electronics", Vol. QE-18, No. 10, pages 1662—1669, the phase of the beam emitted by the diode laser $LD_2$ can be modulated by means of a basic arrangement of which Fig. 6 shows a practical version. This possibility may be used in a coherent optical transmission system.

2. Alternatively, the arrangement shown in Fig. 6 may be used as a diode-laser switch. In that case the wavelength of the beam produced by the diode laser $LD_1$ is substantially equal to the wavelength for which the laser action can be obtained in the diode laser $LD_2$. A large difference between the intensities of the beams emitted by the diode laser $LD_2$ in the "on" and "off" state of this laser is obtained in that the optical signal injected into the diode laser $LD_2$ is absorbed in the off-state of $LD_2$ and amplified in the on-state of $LD_2$. For further details of a diode-laser switch reference is made to the article: "Switching Characteristic of a Laser Diode Switch" in "IEEE Journal of Quantum Electronics", Vol. QE-19, No. 2, pages 157—164.

3. Further, a diode-laser amplifier, for example for use in a repeater station in an optical communication network for amplifying a beam which has been emitted and modulated by a diode laser $LD_1$ and which has traversed a substantial path length, may be constructed as shown in Fig. 6. The behaviour of a diode-laser amplifier is described in the article "S/N and Error Performance in AlGaAs Semiconductor Laser Pre-amplifier and Linear Repeater Systems" in: "IEEE Journal of Quantum Electronics", Vol. QE-18, No. 10, pages 1560—1568.

4. The article "Analysis of a Multistable Semiconductor Light Amplifier" in "Journal of Quantum Electronics", Vol. QE-19, No. 7, pages 1184—1186 describes how a diode laser which is operated with a direct current smaller than the threshold current for the laser action and into which a laser beam is injected can be used as an optical bistable element intended for use as a storage element or as an optical logic "circuit". Such an optical bistable element may be constructed as shown in Fig. 6.

5. The noise which arises owing to mode partition in the case of a diode laser which is operated at high frequency, for example a frequency higher than 100 Mbits/sec, can be suppressed by injecting a beam into this diode laser, which beam is produced by another diode laser which is operated with a direct current. This technique is described in the article "Suppression of Mode Partition Noise by Laser Diode Light Injection", in "Journal of Quantum Electronics", Vol. QE-18, No. 10, pages 1669—1764. The radiation beam to be injected can be applied to the diode laser via a single-mode transmission fibre $SMF_1$ which is coupled to the front of the diode laser, as is shown in Fig. 6.

It is to be noted that Fig. 6 and the following Figures only show the diode lasers. It is evident that each diode laser is accommodated in a package. In principle, the packages, including that of diode laser $LD_2$, may be of a conventional type and may be constructed, for example as described in United States Patent Specification No. 4,355,323.

In the arrangement shown in Fig. 7 the input transmission fibre $SMF_1$ is coupled to a wavelength-sensitive device WSD. This device may be an integrated optical device comprising a lens $L_1$ which collimates the incoming beam and which comprises a reflection grating GR. The grating only reflects radiation of a specific wavelength into the aperture of the input transmission fibre $SMF_1$. The said wavelength is injected into the diode laser $LD_2$. This leads to a substantial reduction of the bandwidth of the radiation spectrum emitted by the diode laser with respect to the spectrum which would be emitted by a diode laser which is not coupled to a wavelength-sensitive element. The principle of the bandwidth reduction is described in the article "Oscillation Center Frequency Tuning..." in "IEEE Journal of Quantum Electronics", Vol. QE-18, No. 10, pages 961—970.

As is shown in Fig. 8, more than two single-mode transmission fibres may be coupled to the front of the diode laser $LD_2$. One of these fibres, $SMF_1$, is coupled to a transmitter T. The signal which is transferred via this transmission fibre is amplified in the diode laser $LD_2$ and the amplified signal is distributed among the output transmission fibres $SMF_2$, $SMF_3$, $SMF_4$ which are coupled to receivers $R_1$, $R_2$, $R_3$. The transmitter T and the receivers $R_1$, $R_2$ and $R_3$ may be replaced by devices which can operate both as transmitter and receiver, so that all the transmission fibres can function both as input transmission fibres and as output transmission fibres. At any instant one of the transmission fibres is always the input fibre and the other transmission fibres are the output fibres. In this way an active star point is obtained which is suitable for use in a local optical transmission network.

For monitoring the radiation emitted by the diode laser it is alternatively possible to employ one of the output transmission fibres of the device shown in Fig. 7 or an additional output transmission fibre in the device shown in Fig. 6 or 7. For this purpose this transmission fibre is coupled to a radiation-sensitive detector DE in the form of a photodiode. The output signal of the photodiode depends *inter alia* on variations in the coupling between the diode laser and the transmission fibre. By means of a measurement signal which is branched from the front of the laser diode the influence of temperature on the diode-laser package can be eliminated in a very reliable manner.

## Claims

1. An electro-optical device comprising a semiconductor laser ($LD_2$), means ($LD_1$, T, WSD) for providing an optical signal to influence a parameter of the laser radiation, means defining a first radiation path between the semiconductor laser and said means for providing an optical signal, and means defining a second radiation path, one end of said second path being located near the semiconductor laser, in order to receive radiation from the laser, characterized in that the radiation paths comprise single mode optical transmission fibres (SMF$_1$, SMF$_2$), in that the optical transmission fibre defining the first radiation path and at least one optical transmission fibre defining the second radiation path are optically coupled to the same radiation-emitting surface of the semiconductor laser (LD$_2$), in that the transmission-fibre ends which face said surface constitute a composite fibre (CF) formed from a plurality of fibre ends that have been fused together, said composite fibre being provided with a tapered end portion whose end face is provided with transparent material (L) having a spherical surface.

2. An electro-optical device as claimed in Claim 1, characterized in that the material (L) on the end face of the transmission fibre (CF) has a refractive index which is substantially higher than that of the transmission-fibre core material.

3. An electro-optical device as claimed in Claim 1, characterized in that the material (L) on the end face of the transmission fibre (CF) has a melting temperature which is lower than those of the transmission fibre materials and has a refractive index which is substantially equal to that of the transmission fibre core material.

4. An electro-optical device as claimed in Claim 1, 2 or 3, characterized in that the means for providing an optical signal to influence a parameter of the laser radiation comprises a further semiconductor laser (LD$_1$).

5. An electro-optical device as claimed in Claim 1, 2 or 3, characterized in that the means for providing an optical signal to influence a parameter of the laser radiation comprises a wavelength selective reflecting element (WSD).

6. An electro-optical device as claimed in Claim 1, 2 or 3, characterized in that it comprises, in addition to the transmission fibre (SMF$_1$) defining the first radiation path, at least two optical transmission fibres (SMF$_2$, SMF$_3$, SMF$_4$) which are coupled to the same radiation-emitting surface of the semiconductor laser (LD$_2$), each of which fibres is coupled to either an optical transmitter (T) or an optical receiver (R$_1$, R$_2$, R$_3$).

7. An electro-optical device as claimed in Claim 1, 2, 3, 4, 5 or 6, characterized in that one of the output transmission fibres (SMF$_2$, SMF$_3$, SMF$_4$) is coupled to a radiation-sensitive detector (DE).

**Patentansprüche**

1. Elektrooptische Einrichtung mit einem Halbleiterlaser (LD$_2$), Mitteln (LD$_1$, T, WSD) zum Erzeugen eines optischen Signals zur Beeinflussung eines Parameters der Laserstrahlung, Mitteln zum Bestimmen eines ersten Strahlungswegs zwischen dem Halbleiterlaser und den Mitteln zum Erzeugen eines optischen Signals, und Mitteln zum Bestimmen eines zweiten Strahlungswegs, wobei ein Ende des zweiten Weges sich in der Nähe des Halbleiterlasers befindet, um aus dem Laser Strahlung zu erhalten, dadurch gekennzeichnet, daß die Strahlungswege optische Monomode-Durchgansfasern (SMF$_1$, SMF$_2$) enthalten, daß die optische Durchgangsfaser, die den ersten Strahlungsweg bestimmt, und wenigstens eine optische Durchgangsfaser, die den zweiten Strahlungsweg bestimmt, mit derselben Strahlungsfläche des Halbleiterlasers (LD$_2$) optisch gekoppelt sind, daß die dieser Fläche zugewandten Durchgangsfaserenden eine zusammengesetzte Faser (CF) bilden, die aus einer Anzahl verschmolzener Faserenden besteht, wobei die zusammengesetzte Faser mit einer sich verjüngenden Endteil versehen ist, dessen Stirnfläche mit transparentem Material (L) mit sphärischer Oberfläche versehen ist.

2. Elektrooptische Einrichtung nach Anspruch 1, dadurch gekennzeichnet, daß das Material (L) auf der Stirnfläche der Durchgangsfaser (CF) einen Brechnungsindex besitzt, der wesentlich höher ist als der des Kernmaterials der Durchgangsfaser.

3. Elektrooptische Einrichtung nach Anspruch 1, dadurch gekennzeichnet, daß das Material (L) auf der Stirnfläche der Durchgangsfaser (CF) eine niederigere Schmelztemperatur als die der Durchgangsfaser-Werkstoffe und einen im wesentlichen gleichen Berechnungsindex als der des Kernmaterials der Durchgangsfaser hat.

4. Elektrooptische Einrichtung nach Anspruch 1, 2 oder 3, dadurch gekennzeichnet, daß das Mittel zum Erzeugen eines optischen Signals zum Beeinflussen eines Parameters der Laserstrahlung einen weiteren Halbleiterlaser (LD$_1$) enthält.

5. Elektrooptische Einrichtung nach Anspruch 1, 2 oder 3, dadurch gekennzeichnet, daß das Mittel zum Erzeugen eines optischen Signals zum Beeinflussen eines Parameters der Laserstrahlung ein wellenlängenselektives Reflexionselement (WSD) enthält.

6. Elektrooptische Einrichtung nach Anspruch 1, 2 oder 3, dadurch gekennzeichnet, daß darin neben der Durchgangsfaser (SMF$_1$) zum Bestimmen des ersten Strahlungsweges wenigstens zwei optische Durchgangsfasern (SMF$_2$, SMF$_3$, SMF$_4$) vorgesehen sind, die mit derselben Strahlungsfläche des Halbleiterlasers (LD$_2$) gekoppelt sind, wobei jede dieser Fasern entweder mit einem optischen Sender (T) oder mit einem optischen Empfänger (R$_1$, R$_2$, R$_3$) gekoppelt ist.

7. Elektrooptische Einrichtung nach Anspruch 1, 2, 3, 4, 5 oder 6, dadurch gekennzeichnet, daß eine der ausgehenden Durchgangsfasern (SMF$_2$, SMF$_3$, SMF$_4$) mit einem strahlungsempfindlichen Detektor (DE) verbunden ist.

**Revendications**

1. Dispositif électro-optique comportant un laser semiconducteur (LD$_2$), des moyens (LD$_1$, T, WSD) pour fournir un signal optique afin d'influencer un paramètre du rayonnement laser, des moyens définissant un premier trajet de rayonnement entre le laser semiconducteur et lesdits moyens pour fournir un signal optique, et des moyens définissant un deuxième trajet de rayonnement, l'une des extrémités dudit deuxième trajet étant disposée à proximité du laser semiconducteur pour recevoir du rayonnement du laser, caractérisé en ce que les trajets de rayonnement comportent des fibres optiques de transmission monomode (SMF₁, SMF₂), en ce que la fibre optique de transmission définissant le premier trajet de rayonnement et au moins une fibre optique de transmission définissant le deuxième trajet de rayonnement sont couplées optiquement à la même surface émettrice de rayonnement du laser semiconducteur (LD₂), en ce que les extrémités de fibre de transmission situées en regard de ladite surface constituent une fibre composée (CF) formée d'une pluralité d'extrémités de fibre fusionnées, ladite fibre composée présentant une partie terminale conique dont la face terminale est munie d'un matériau transparent (L) ayant une surface sphérique.

2. Dispositif électro-optique selon la revendication 1, caractérisé en ce que le matériau (L) sur la face terminale de la fibre de transmission (CF) a un indice de réfraction sensiblement supérieur à celui du matériau de coeur de la fibre de transmission.

3. Dispositif électro-optique selon la revendication 1, caractérisé en ce que le matériau (L) sur la face terminale de la fibre de transmission (CF) a une température de fusion inférieure à celles des matériaux de la fibre de transmission et un indice de réfraction sensiblement égal à celui du matériau de coeur de la fibre de transmission.

4. Dispositif électro-optique selon la revendication 1, 2 ou 3, caractérisé en ce que les moyens pour fournir un signal optique afin d'influencer un paramètre du rayonnement laser comportent un autre laser semiconducteur (LD₁).

5. Dispositif électro-optique selon la revendication 1, 2 ou 3, caractérisé en ce que les moyens pour fournir un signal optique afin d'influencer un paramètre du rayonnement laser comportent un élément réflecteur sélectif en longueur d'onde (WSD).

6. Dispositif électro-optique selon les revendications 1, 2 ou 3, caractérisé en ce qu'il comporte, en plus de la fibre de transmission (SMF₁) définissant le premier trajet de rayonnement, au moins deux fibres optiques de transmission (SMF₂, SMF₃, SMF₄) couplées à la même surface émettrice de rayonnement du laser semiconducteur (LD₂), fibres qui sont couplées chacune, soit à un émetteur optique (T), soit à un récepteur optique (R₁, R₂, R₃).

7. Dispositif électro-optique selon la revendication 1, 2, 3, 4, 5, ou 6, caractérisé en ce que l'une des fibres de transmission de sortie (SMF₂, SMF₃, SMF₄) est couplée à un détecteur sensible au rayonmement (DE).

FIG.1a

FIG.1b

FIG.2

FIG.3

FIG.4

FIG.5

SMF$_2$

LD$_2$

SMF$_1$

IS

LD$_1$

**F IG.6**

SMF$_2$

LD$_2$

SMF$_1$

GR

L$_1$

WSD

**F IG.7**

SMF$_1$    SMF$_2$

LD$_2$

SMF$_3$    SMF$_4$

T

R$_1$

R$_2$

R$_3$

DE

**F IG.8**